# EUROPEAN PATENT SPECIFICATION

(11) **EP 4 258 419 B1**
(45) Date of publication and mention of the grant of the patent: **13.08.2025**
(21) Application number: 22719499.0
(22) Date of filing: 21.02.2022
(51) Int. Cl.: H01M 10/613, H01M 50/209, H01M 50/224, H01M 50/507

(54) **BATTERY, ELECTRICAL DEVICE, AND BATTERY PREPARATION METHOD AND DEVICE**
BATTERIE, ELEKTRISCHE VORRICHTUNG SOWIE BATTERIEHERSTELLUNGSVERFAHREN UND -VORRICHTUNG
BATTERIE, DISPOSITIF ÉLECTRIQUE ET PROCÉDÉ ET DISPOSITIF DE PRÉPARATION DE BATTERIE

(43) Date of publication of application: 11.10.2023
(73) Proprietor: Contemporary Amperex Technology (Hong Kong) Limited, Central, Central And Western District (HK)
(72) Inventor: Sun, Zhanyu, Ningde City, Fujian 352100 (CN); Yang, Haiqi, Ningde City, Fujian 352100 (CN); Huang, Xiaoteng, Ningde City, Fujian 352100 (CN); Wang, Peng, Ningde City, Fujian 352100 (CN); Hou, Yuepan, Ningde City, Fujian 352100 (CN)
(74) Representative: Herrero & Asociados, S.L.
(86) International application number: PCT/CN2022/077147
(87) International publication number: WO 2023/155207

(56) References cited:
- CN-A- 111 009 629
- CN-U- 209 496 928
- JP-A- 2000 164 186
- JP-A- 2006 244 756
- US-A1- 2002 098 414
- US-A1- 2002 098 414
- US-A1- 2004 201 366
- US-A1- 2013 022 856
- US-A1- 2020 328 385
- US-A1- 2021 265 679
- SHAH K ET AL: "Modeling of steady-state and transient thermal performance of a Li-ion cell with an axial fluidic channel for cooling", INTERNATIONAL JOURNAL OF ENERGY RESEARCH, WILEY, CHICHESTER, GB, vol. 39, no. 4, 19 December 2014 (2014-12-19), pages 573 - 584, XP071644072, ISSN: 0363-907X, DOI: 10.1002/ER.3274

## Description

### TECHNICAL FIELD

The present application relates to the field of battery technologies, and in particular, to a battery, a power consumption device, and a method and device for producing a battery.

### BACKGROUND

With the increasing environmental pollution, the new energy industry has attracted more and more attention. In the new energy industry, the battery technology is an important factor related to their development.

The energy density of the battery is an important parameter in performances of the battery; however, other performance parameters of the battery need to be considered when improving the energy density of the battery. Thus, how to improve performances of the battery is one urgent technical problem to be solved in the battery technology.

US2020328385A1 provides a battery module, including a box having an inner cavity; at least two battery unit array structures, each of the at least two battery unit array structures including a plurality of battery units arranged along a length direction; and at least two support components, each of the at least two support components being fixed to a side of one of the at least two battery unit array structures in a height direction. The at least two battery unit array structures are arranged along a width direction and correspond to the at least two support components in one-to-one correspondence. The battery unit array structures and the components are disposed in the inner cavity.

XP071644072 (Shah K. et al.: "Modeling of steady-state and transient thermal performance of a li-ion cell with an axial fluidic channel for cooling") discloses that effective dissipation of heat generated during the operation of a Li ion cell is critical to ensure safety and performance. In this paper, thermal performance of a cylindrical Li-ion cell with an axial channel for coolant flow is analyzed. One fundamental thermal-electrical trade-off that active cooling of an annular Li-ion cell must address is the trade-off between reduction in cell temperature and reduction in cell capacity. By increasing the inner radius of the annular cylinder, it is possible to reduce the cell temperature due to increased coolant flow. However, this also results in reduction in capacity of the cell since the increased coolant flow region reduces the cell volume and hence the cell capacity.

### SUMMARY

The present application provides a battery, a power consumption device, and a method and device for producing a battery, which may improve the energy density of the battery while ensuring the thermal management in the battery, thereby improving performances of the battery.

In a first aspect, a battery is provided, including: a plurality of battery cells arranged along a first direction; and a thermal management component extending along the first direction and being connected to a first wall of each battery cell of the plurality of battery cells, the first wall being a wall with a largest surface area of the battery cell; the thermal management component including a flow channel for accommodating a fluid to adjust a temperature of the battery cell; a second direction being perpendicular to the first wall; where, a size of the flow channel in the second direction is W, and a capacity Q of the battery cell and the size W of the flow channel satisfy: 1.0Ah/mm≤Q/W≤400Ah/mm; where the battery includes a plurality of the battery cells arranged in a plurality of columns along the first direction and a plurality of the thermal management components, where the plurality of columns of the battery cells and the plurality of the thermal management components are alternately disposed in the second direction.

In the embodiment of the present application, the thermal management component is disposed in the battery to be connected to the first wall with a largest surface area of each battery cell of the plurality of battery cells that are arranged in a column along the first direction; and the size W of the flow channel of the thermal management component in the second direction and the capacity Q of the battery cell satisfy 1.0Ah/mm≤Q/W≤400Ah/mm. In this way, there is no need to dispose a beam and other structures in the middle of a battery box, which may largely improve the space utilization rate inside the battery, thereby improving the energy density of the battery; and at the same time, the use of the above thermal management component may also ensure the thermal management in the battery. Thus, a technical solution of an embodiment of the present application may improve the energy density of the battery while ensuring the thermal management in the battery, thereby improving performances of the battery. In addition, the plurality of columns of battery cells and the plurality of thermal management components are connected to each other to form a whole, and are accommodated in the box, which may not only effectively perform the thermal management on each column of battery cells, but also ensure the overall structural strength of the battery, thereby improving performances of the battery.

In a possible implementation manner, a size D of the battery cell along the second direction and a size H of the thermal management component along a third direction satisfy: 0.03≤D/H≤5.5, and the third size is perpendicular to the first direction and the second direction. In this way, sizes of the thermal management components may be flexibly set for battery cells of different sizes, which not only meets the requirement of the energy density but also well prevents thermal diffusion between battery cells.

In a possible implementation manner, a size H of the thermal management component along the third direction is 15mm~300mm. In this way, space, strength and thermal management may be taken into account to ensure performances of the battery.

**In** a possible implementation manner, the size W of the flow channel is 0.8mm~50mm. **In** this way, space, strength and thermal management may be taken into account to ensure performances of the battery.

**In** a possible implementation manner, the thermal management component includes a first thermally conductive plate and a second thermally conductive plate disposed oppositely along the second direction; where, a flow channel is disposed between the first thermally conductive plate and the second thermally conductive plate, and the flow channel is configured to accommodate a fluid to adjust the temperature of the battery cell.

**In** a possible implementation manner, the thermal management component further includes a stiffener, disposed between the first thermally conductive plate and the second thermally conductive plate; and the stiffener, the first thermally conductive plate and the second thermally conductive plate form the flow channel. In this way, the structural strength of the thermal management component may be enhanced.

In a possible implementation manner, an angle between the stiffener and the first thermally conductive plate or the second thermally conductive plate is an acute angle. In this way, in the second direction, the thermal management component may have a larger compression space, thereby providing more expansion space for the battery cell.

In a possible implementation manner, the battery cell includes two first walls disposed opposite to each other in the second direction and two second walls disposed oppositely in the first direction, where in the first direction, the second walls of two adjacent battery cells face each other. In this way, the first wall with the large area is used to connect to the thermal management component, which facilitates the thermal exchange of the battery cells and ensures performances of the battery.

In a possible implementation manner, the thermal management component and the first wall are bonded. In this way, the strength of the connection between the thermal management component and the first wall is increased.

In a second aspect, a power consumption device is provided, including the battery in the above first aspect or any possible implementation manner of the first aspect, the battery being configured to provide electric energy.

In a third aspect, a method for producing battery is provided, including: providing a plurality of battery cells arranged along a first direction; and providing a thermal management component extending along the first direction and being connected to a first wall of each battery cell of the plurality of battery cells, the first wall being a wall with a largest surface area of the battery cell; the thermal management component including a flow channel for accommodating a fluid to adjust a temperature of the battery cell; a second direction being perpendicular to the first wall; where, a size of the flow channel in the second direction is W, and a capacity Q of the battery cell and the size W of the flow channel satisfy: 1.0Ah/mm≤Q/W≤ 400Ah/mm; where the battery includes a plurality of the battery cells arranged in a plurality of columns along the first direction and a plurality of the thermal management components, where the plurality of columns of the battery cells and the plurality of the thermal management components are alternately disposed in the second direction.

In a fourth aspect, a device for producing a battery is provided, including a module for executing the method provided in the above third aspect.

In the technical solution of the embodiment of the present application, the thermal management component is disposed in the battery to be connected to the first wall with a largest surface area of each battery cell of the plurality of battery cells that are arranged in a column along the first direction; and the size W of the flow channel of the thermal management component in the second direction and the capacity Q of the battery cell satisfy 1.0Ah/mm≤Q/W≤400Ah/mm; where the battery includes a plurality of the battery cells arranged in a plurality of columns along the first direction and a plurality of the thermal management components, where the plurality of columns of the battery cells and the plurality of the thermal management components are alternately disposed in the second direction. In this way, there is no need to dispose a beam and other structures in the middle of a battery box, which may largely improve the space utilization rate inside the battery, thereby improving the energy density of the battery; and at the same time, the use of the above thermal management component may also ensure the thermal management in the battery. Thus, a technical solution of an embodiment of the present application may improve the energy density of the battery while ensuring the thermal management in the battery, thereby improving performances of the battery. In addition, the plurality of columns of battery cells and the plurality of thermal management components are connected to each other to form a whole, and are accommodated in the box, which may not only effectively perform the thermal management on each column of battery cells, but also ensure the overall structural strength of the battery, thereby improving performances of the battery.

### BRIEF DESCRIPTION OF DRAWINGS

In order to illustrate the technical solution in the embodiments of the present application more clearly, brief description will be made below to the drawings required in the embodiments of the present application, and apparently, the drawings described below are some embodiments of the present application only, and other drawings could be obtained based on these drawings by those ordinary skilled in this art without creative efforts.
FIG. 1 is a schematic diagram of a vehicle according to an embodiment of the present application;
FIG. 2 is a schematic diagram of a battery according to an embodiment of the present application;
FIG. 3 is a schematic diagram of a battery cell according to an embodiment of the present application;
FIG. 4 is a schematic diagram of a battery according to an embodiment of the present application;
FIG. 5 is a schematic diagram of a battery according to an embodiment of the present application;
FIG. 6 is a schematic diagram of a battery cell connected to a thermal management component according to an embodiment of the present application;
FIG. 7 is a cross-sectional view taken along a direction A-A in FIG. 6;
FIG. 8 is an enlarged schematic diagram of a region B in FIG. 7;
FIG. 9 is a schematic diagram of a battery according to an embodiment of the present application;
FIG. 10 is a schematic diagram of a method for producing a battery according to an embodiment of the present application; and
FIG. 11 is a schematic diagram of a device for producing a battery according to an embodiment of the present application.

In the drawings, the drawings are not drawn to actual scale.

### DESCRIPTION OF EMBODIMENTS

Embodiments of the present application will be further described below in detail with reference to the drawings and embodiments. The detailed description of the following embodiments and the accompanying drawings are used to exemplarily illustrate principles of the present application, but cannot be used to limit the scope of the present application, that is, the present application is not limited to the described embodiments.

In the depiction of the present application, it is noted that unless otherwise defined, all technological and scientific terms used have the same meanings as those commonly understood by those skilled in the art to which the present application belongs. The terms used are merely for the purpose of describing specific embodiments, but are not intended to limit the present application. The terms "including" and "having" and any variations thereof in the specification and the claims of the present application as well as the brief description of the drawings described above are intended to cover non-exclusive inclusion. "A plurality of" means more than two; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus may not be understood as a limitation the present application. **In** addition, the terms "first", "second", and "third" are only intended for the purpose of description, and shall not be understood as an indication or implication of relative importance. "Vertical" is not strictly vertical, but within an allowable range of error. "Parallel" is not strictly parallel, but within an allowable range of error.

The phrase "embodiments" referred to in the present application means that the descriptions of specific features, structures, and characteristics in combination with the embodiments are included in at least an embodiment of the present application. Such phrases appearing in all locations of the specification are neither necessarily a same embodiment nor an independent or alternative embodiment that is mutually exclusive from another embodiment. Those skilled in the art understand, in explicit and implicit manners, that an embodiment described in the present application may be combined with another embodiment.

The terms representing directions in the following description are all directions shown in the drawings, and limit the specific structure of the present application. **In** the description of the present application, it should be further noted that unless otherwise explicitly specified and defined, the terms "mounting", "connecting" and "connection" should be understood in a broad sense; for example, they may be a fixed connection, a detachable connection, or an integrated connection; may be a direct connection and may also be an indirect connection through an intermediate medium, or may be communication between the interiors of two elements. Those of ordinary skill in the art may appreciate the specific meanings of the foregoing terms in the present application according to specific circumstances.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relation.

**In** the present application, battery cells may include lithium-ion secondary batteries, lithium-ion primary batteries, lithium-sulfur batteries, sodium/lithium-ion batteries, sodium-ion batteries or magnesium-ion batteries, etc., which are not limited by the embodiments of the present application. The battery cells may be cylindrical, flat, and cuboid or in another shape, which is not limited by the embodiments of the present application. The battery cells are generally divided into three types according to the way of packaging: cylindrical battery cells, prismatic battery cells and pouch battery cells, which are not limited by the embodiments of the present application.

The battery mentioned in the embodiment of the present application refers to a single physical module that includes one or more battery cells to provide a higher voltage and capacity. For example, the battery mentioned in the present application may include a battery pack, etc. The battery generally includes a box body for enclosing one or more battery cells. The box may prevent liquid or other foreign matters from affecting the charging or discharging of the battery cells.

The battery cells includes an electrode assembly and an electrolytic solution, and the electrode assembly is composed of a positive electrode plate, a negative electrode plate and a separator. The operation of the battery cells mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive electrode tab. **In** an example of a lithium-ion battery, the material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and serves as a negative electrode tab. A material of the negative electrode current collector may be copper, and a negative electrode active material may be carbon, silicon, or the like. In order to ensure that no fusing occurs when a large current passes through, there are a plurality of positive electrode tabs which are stacked together, and there are a plurality of negative electrode tabs which are stacked together. A material of the isolation film may be polypropylene (PP) or polyethylene (PE), etc. In addition, the electrode assembly may be a winding structure or a laminated structure, and the embodiments of the present application are not limited thereto.

In order to meet different power demands, the battery may include a plurality of battery cells, where the plurality of battery cells may be in series connection, parallel connection or series-parallel connection. The series-parallel connection refers to a combination of series connection and parallel connection. Optionally, a plurality of battery cells may be first connected in series, in parallel or in series and parallel to form a battery module, and then a plurality of battery modules are connected in series, in parallel or in series and parallel to form a battery. That is, a plurality of battery cells may directly form a battery, or may first form a battery module, and then battery modules form a battery. The battery is further provided in a power consumption device to provide electrical energy for the power consumption device.

With the development of the battery technology, it is necessary to consider design factors in multiple aspects simultaneously, such as energy density, cycle life, discharge capacity, C-rate, safety, etc. Among them, when an internal space of the battery is fixed, improving the utilization rate of the internal space of the battery is an effective means to improve the energy density of the battery. However, while improving the utilization rate of the internal space of the battery, other parameters of the battery, such as the thermal management of the battery, must also be considered.

During the use of the battery cell, a large amount of heat will be generated. When the heat cannot be dissipated in time, the heat will accumulate and superimpose, resulting in thermal runaway and safety accidents, such as smoke, fire, and explosion. At the same time, long-term severe temperature unevenness will greatly reduce the service life of the battery. In addition, when the temperature is very low, the discharge efficiency of the battery is very low, and it is even difficult to start at a low temperature, which affects the normal use of the battery. Therefore, how to ensure the thermal management requirement of the battery is crucial.

In view of this, the embodiment of the present application providing a technical solution: a thermal management component is disposed in the battery to be connected to a first wall with a largest surface area of each battery cell of the plurality of battery cells that are arranged in a column along a first direction, where the thermal management component includes a flow channel; and in the second direction, a size W of the flow channel of the thermal management component and a capacity Q of the battery cell satisfy 1.0Ah/mm≤Q/W≤400Ah/mm. In this way, there is no need to dispose a beam and other structures in the middle of a battery box, which may largely improve the space utilization rate inside the battery, thereby improving the energy density of the battery. At the same time, the use of the above thermal management component may also ensure the thermal diffusion between battery cells. Thus, a technical solution of an embodiment of the present application may improve the energy density of the battery while ensuring the thermal management in the battery, thereby improving performances of the battery.

The technical solutions described in the embodiments of the present application are all applicable to various apparatuses using batteries, such as mobile phones, portable devices, notebook computers, electromobiles, electronic toys, electric tools, electric vehicles, ships and spacecrafts. For example, the spacecrafts include airplanes, rockets, space shuttles, spaceships, etc.

It should be understood that the technical solutions described in the embodiments of the present application are not only applicable to the devices described above, but also applicable to all devices using batteries. However, for brief description, the following embodiments are all described by an example of an electric vehicle.

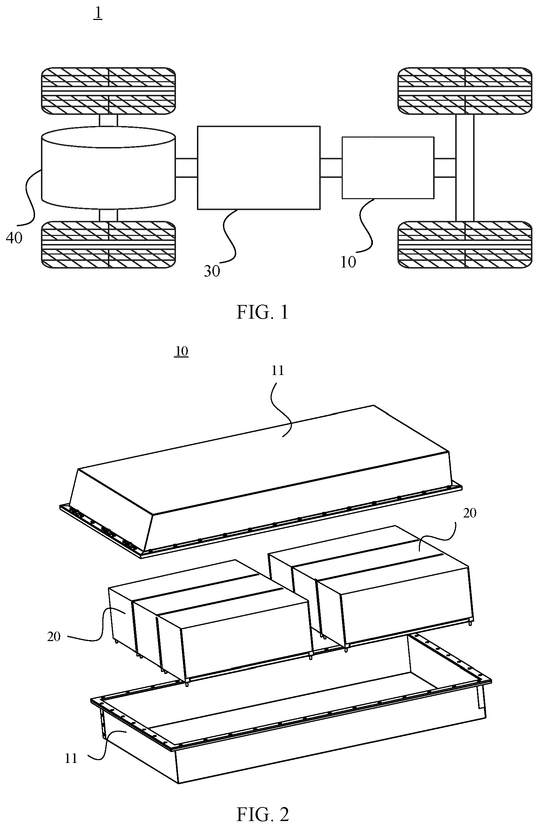

For example, as shown in FIG. 1, it is a schematic structural diagram of a vehicle 1 according to an embodiment of the present application. The vehicle 1 may be a fuel vehicle, a gas vehicle or a new-energy vehicle. The new-energy vehicle may be a full electric vehicle, a hybrid vehicle or an extended-range vehicle, or the like. A motor 40, a controller 30 and a battery 10 may be disposed inside the vehicle 1, and the controller 30 is configured to control the battery 10 to supply power to the motor 40. For example, the battery 10 may be provided at the bottom or the head or the tail of the vehicle 1. The battery 10 may be configured to supply power to the vehicle 1. For example, the battery 10 may be used as an operation power supply of the vehicle 1 and is used for a circuit system of the vehicle 1, for example, for a working power demand of the vehicle 1 during startup, navigation and running. In another embodiment of the present application, the battery 10 may be used not only as an operation power source of the vehicle 1, but also as a driving power source of the vehicle 1, replacing or partially replacing fuel or natural gas to provide driving power for the vehicle 1.

In order to satisfy different power demands, the battery 10 may include a plurality of battery cells. For example, as shown in FIG. 2, it is a schematic structural diagram of a battery 10 according to an embodiment of the present application. The battery 10 may include a plurality of battery cells 20. The battery 10 may further include a box 11 with a hollow structure inside, and the plurality of battery cells 20 are accommodated in the box 11. For example, the plurality of battery cells 20 are connected in series or in parallel or in a hybrid and are then placed in the box body 11.

Alternatively, the battery 10 may also include other structures, which will not be described in detail herein. For example, the battery 10 may also include a bus component. The bus component is configured to implement the electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism passing through the box body. Optionally, the electrically conductive mechanism may also belong to the bus component.

According to different power requirements, the number of the battery cells 20 may be set as any value. The plurality of battery cells 20 may be connected in series, in parallel or in series and parallel to implement larger capacity or power. Since there may be many battery cells 20 included in each battery 10, the battery cells 20 may be disposed in groups for convenience of installation, and each group of battery cells 20 constitutes a battery module. The number of the battery cells 20 included in the battery module is not limited and may be set as required. The battery may include a plurality of battery modules, and these battery modules may be connected in series, in parallel or in series and parallel.

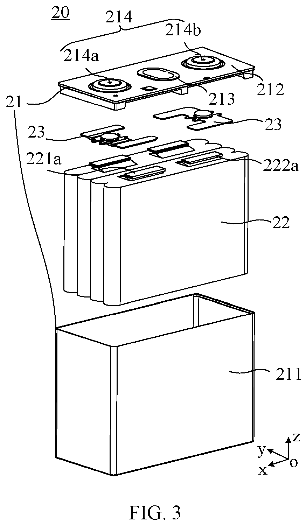

FIG. 3 is a schematic structural diagram of a battery cell 20 according to an embodiment of the present application. The battery cell 20 includes one or more electrode assemblies 22, a housing 211 and a cover plate 212. The housing 211 and the cover plate 212 form a shell or a battery 21. A wall of the housing 211 and the cover plate 212 are both referred to as a wall of the battery cell 20, where for the cuboid battery cell 20, the wall of the housing 211 includes a bottom wall and four side walls. The housing 211 is shaped according to the combined shape of the one or more electrode assemblies 22. For example, the housing 211 may be a hollow cuboid or cube or cylinder, and one surface of the housing 211 has a hole such that the one or more electrode assemblies 22 may be placed in the housing 211. For example, when the housing 211 is a hollow cuboid or cube, one plane of the housing 211 is an opening surface, i.e., the plane does not have a wall, so that the inside and outside of the housing 211 are in communication with each other. When the housing 211 is a hollow cylinder, an end face of the housing 211 is an opening surface, i.e., the end face does not have a wall, so that the inside and outside of the housing 211 are in communication with each other. The cover plate 212 covers the hole and is connected to the housing 211 to form a closed chamber in which the electrode assembly 22 is placed. The housing 211 is filled with an electrolyte, such as an electrolytic solution.

The battery cell 20 may further include two electrode terminals 214, and the two electrode terminals 214 may be provided on the cover plate 212. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively. Each electrode terminal 214 is correspondingly provided with a connection member 23 also called a current collecting member 23, which is located between the cover plate 212 and the electrode assembly 22 and configured to electrically connect the electrode assembly 22 to the electrode terminal 214.

As shown in FIG. 3, each electrode assembly 22 has a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. The first electrode tab 221a of the one or more electrode assemblies 22 is connected to one electrode terminal through one connecting member 23, and the second electrode tab 222a of the one or more electrode assemblies 22 is connected to the other electrode terminal through the other connecting member 23. For example, the positive electrode terminal 214a is connected to the positive electrode tab via one connecting member 23, and the negative electrode terminal 214b is connected to the negative electrode tab via the other connecting member 23.

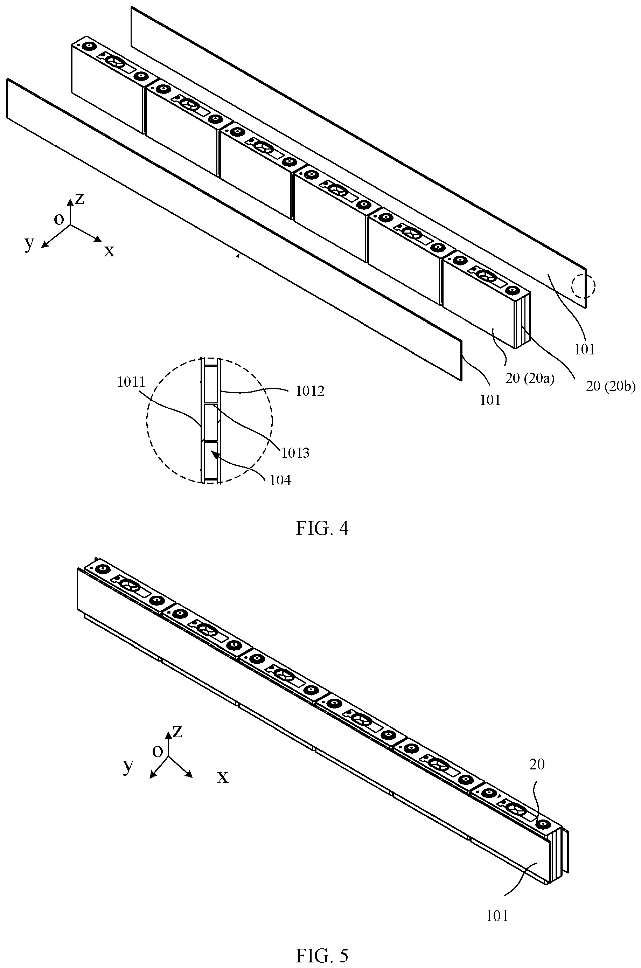

**In** the battery cell 20, according to actual usage requirements, there may be a single or a plurality of electrode assemblies 22. As shown in FIG. 4, there are four independent electrode assemblies 22 in the battery cell 20.

A pressure relief mechanism 213 may also be disposed on the battery cell 20. The pressure relief mechanism 213 is configured to be actuated when an internal pressure or temperature of the battery cell 20 reaches a threshold, to relieve the internal pressure or temperature.

The pressure relief mechanism 213 may be in various possible pressure relief structures, which is not limited in the embodiment of the present application. For example, the pressure relief mechanism 213 may be a temperature-sensitive pressure relief mechanism configured to be capable of being melted when the internal temperature of the battery cell 20 provided with the pressure relief mechanism 213 reaches a threshold; and/or the pressure relief mechanism 213 may be a pressure-sensitive pressure relief mechanism configured to be capable of being fractured when an internal gas pressure of the battery cell 20 provided with the pressure relief mechanism 213 reaches a threshold.

FIG. 4 is a schematic structural diagram of a battery in an embodiment of the present application. As shown in FIG. 4, the battery 10 includes a plurality of battery cells 20 and thermal management components 101 arranged along a first direction. The thermal management component 101 extends along the first direction and is connected to the first wall 20a of each battery cell 20 of the plurality of battery cells 20, and the first wall 20a is a wall with a largest surface area of the battery cell 20. The thermal management component 101 includes a flow channel 104 for accommodating a fluid to adjust a temperature of the battery cell 20, and a second direction is perpendicular to the first wall 20a. A size of the flow channel 104 in the second direction is W, and the capacity Q of the battery cell and the size W of the flow channel satisfy: 1.0Ah/mm≤Q/W≤400Ah/mm.

The flow channel 104 may be formed by a pair of thermally conductive plates in the thermal management component 101, and the size W of the flow channel along the second direction may be a distance between inner walls of the thermally conductive plates along the second direction. The larger the size W of the flow channel 104 is, the larger the capacity of the flow channel 104 is, the larger a volume of the fluid that may flow in the flow channel 104 is, and faster the heat transfers between the battery cells 20 and the thermal management component 101. For example, when the thermal management component 101 is a water cooling plate, the larger the size W of the flow channel 104 is, the faster the heat of the battery cells 20 is dissipated, and thus the cooling of the battery cells 20 is faster, which may prevent the heat of the battery cell 20 from diffusing to the adjacent battery cells 20. Optionally, the fluid may flow in a circulating manner to achieve a better temperature adjustment effect. Optionally, the fluid may be water, a mixture of water and ethylene glycol, refrigerant or air.

FIG. 5 is a schematic structural diagram of a battery according to an embodiment of the application. As shown in FIG. 5, the thermal management component 101 and the plurality of battery cells 20 all extend along the first direction, that is, the x direction, and the thermal management component 101 is connected to the first wall 20a of each battery cell 20, that is, the first wall 20a faces the thermal management component 101. In this way, the heat of the battery cell 20 may be transferred to the thermal management component 101 and taken away through the fluid in the flow channel 104, so as to control the temperature of the battery cell 20, for example, to achieve cooling of the battery cell 20.

Optionally, along the first direction, a length of the thermal management component 101 is equal to the sum of lengths of all the battery cells 20 in the same column, so that the battery cells 20 may be sufficiently cooled while reducing the occupation space of the thermal management component 101. In other embodiments, the length of the thermal management component 101 may be less than or equal to the sum of the lengths of all the battery cells 20, which may be specifically set according to actual needs. This is not limited in the embodiment of the present application.

The size W of the flow channel 104 of the thermal management component 101 and the capacity Q of the battery cell 20 satisfy 1.0Ah/mm≤Q/W≤400Ah/mm. By rapidly cooling down the battery cell 20 whose temperature is too high, the heat of the battery cell 20 may be prevented from diffusing and transferred to the adjacent battery cells 20, which causes the temperature of the adjacent battery cells 20 to be too high.

When Q/W>400Ah/mm, the size W of the flow channel 104 is smaller at this time, the volume of the fluid that may flow in the flow channel 104 is smaller, and cannot cool the battery cells 20 in time. In this way, when a temperature of a certain battery cell 20 is too high, since the battery cell 20 is not cooled in time, the heat of the battery cell 20 is diffused to the adjacent battery cells 20, causing that the temperature of the adjacent battery cells 20 is too high, an abnormality occurs, and performances of the entire battery 10 is affected.

When Q/W<1.0Ah/mm, the size W of the flow channel 104 is larger at this time, and the volume of the fluid that may flow in the flow channel 104 is larger, which may sufficiently cool the battery cell 20. However, the flow channel 104 with a larger size results in a larger occupation space of the thermal management component 101, which cannot ensure the energy density of the battery 10; and at the same time, the thermal management component 101 with a large volume also results in an increase in cost.

In the embodiment of the present application, the thermal management component 101 is connected to the first wall 20a with a largest surface area of each battery cell 20 of the plurality of battery cells 20 that are arranged in the same column along the first direction; and at the same time the size W of the flow channel 104 and the capacity Q of the battery cell 20 satisfy: 1.0Ah/mm≤Q/W≤400Ah/mm. There is no need to dispose a beam and other structures in the middle of a battery box, which may largely improve the space utilization rate inside the battery, thereby improving the energy density of the battery. At the same time, the use of the above thermal management component may also ensure the thermal management in the battery. Thus, a technical solution of an embodiment of the present application may improve the energy density of the battery while ensuring the thermal management in the battery, thereby improving performances of the battery.

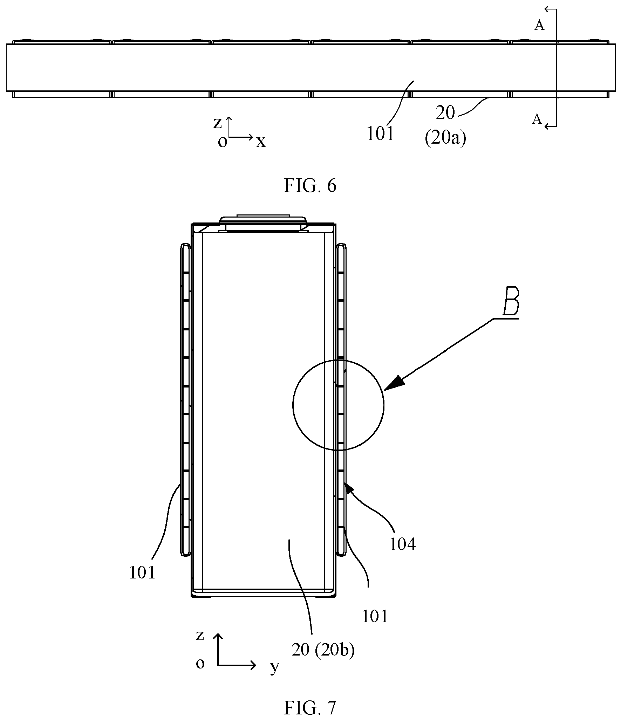

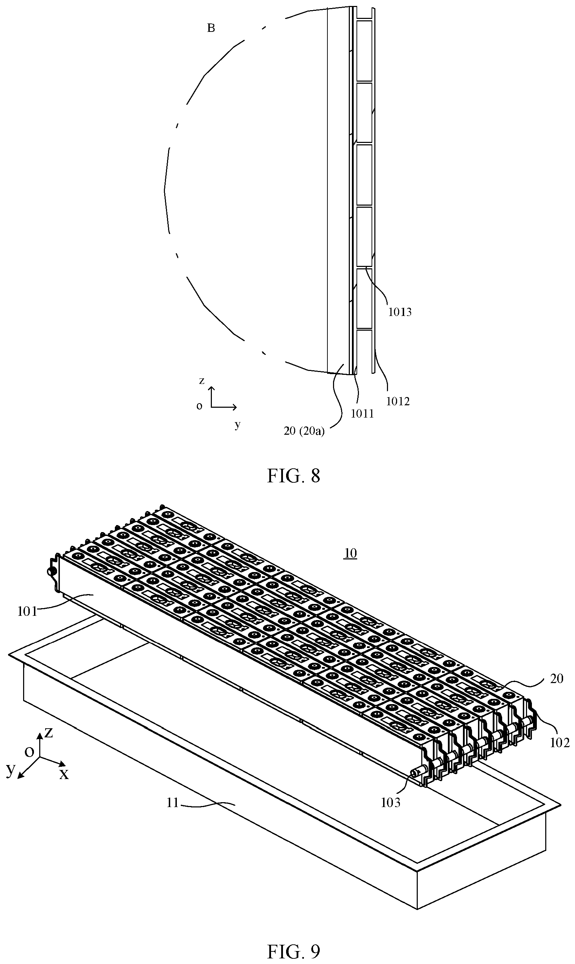

FIG. 6 is a schematic structural diagram of a battery cell connected to a thermal management component according to an embodiment of the present application. FIG. 7 is a cross-sectional view taken along a direction A-A in FIG. 6. FIG. 8 is an enlarged schematic diagram of a region B in FIG. 7. Optionally, in an embodiment of the present application, with reference to FIGS. 6 to 8, a size D of the battery cell 20 along the second direction and the size H of the thermal management component 101 along the third direction satisfy: 0.03≤D/H≤ 5.5, and the third direction is perpendicular to the first direction and the second direction.

The size D of the battery cell 20 along the second direction may be a thickness D of the battery cell 20. The thickness D of the battery cell 20 is related to the capacity Q of the battery cell 20. The larger the thickness D is, the larger the capacity Q is.

The size H of the thermal management component 101 along the third direction may be a height H of the thermal management component 101 along the z direction; and the larger H is, the larger the volume of the thermal management component 101 is, the larger the occupation space is, and at the same time the stronger the thermal management ability is. For example, when the thermal management component 101 is a water cooling plate, the larger H is, the stronger the cooling ability for the battery cell 20 is, and the more effectively the heat of the battery cell 20 may be prevented from diffusing to the adjacent battery cells 20.

When D/H<0.03, the size H of the thermal management component 101 along the third direction is larger, which may sufficiently meet the requirement of preventing the heat of the battery cells 20 from diffusing, but it is difficult to meet the requirement of the energy density of the battery 10. At the same time, the thermal management component 101 with a larger volume also results in an increase in production costs.

When D/H>5.5, it is difficult for the thermal management component 101 to meet the thermal management requirement for the battery cells 20, that is, the heat of the battery cell 20 cannot be dissipated in time, thus causing the heat to diffuse to the adjacent battery cells 20, resulting in an abnormal temperature of other battery cells 20, thereby affecting performances of the battery 10.

Optionally, in an embodiment of the present application, the size H of the thermal management component 101 along the third direction is 15 mm~300 mm. **In** this way, the thermal management component 101 may satisfy the requirements of both strength and performances of thermal management.

Optionally, in an embodiment of the present application, the size W of the flow channel 104 is 0.8 mm~50 mm. **In** this way, the requirements of both strength and thermal management may be satisfied.

Optionally, in an implementation of the present application, the thermal management component 101 includes a first thermally conductive plate 1011 and a second thermally conductive plate 1012 disposed oppositely along second direction; where, a flow channel 104 is disposed between the first thermally conductive plate 1011 and the second thermally conductive plate 1012, and the flow channel 104 is configured to accommodate a fluid to adjust the temperature of the battery cell 20.

The first thermally conductive plate 1011 and the second thermally conductive plate 1012 extend along the first direction and are disposed oppositely along the second direction. In this way, along the second direction, a cavity between the first thermally conductive plate 1011 and the second thermally conductive plate 1012 forms the flow channel 104.

Optionally, in an embodiment of the present application, the thermal management component 101 further includes a stiffener 1013, disposed between the first thermally conductive plate 1011 and the second thermally conductive plate 1012; and the stiffener 1013, the first thermally conductive plate 1011 and the second thermally conductive plate 1012 form the flow channel 104. In this way, the structural strength 101 of the thermal management component may be enhanced.

Optionally, the number of stiffeners 1013 is one, so that one or two flow channels 104 may be formed between the first thermally conductive plate 1011 and the second thermally conductive plate 1012. When the stiffener 1013 is only connected to the first thermally conductive plate 1011 or the second thermally conductive plate 1012, the stiffener 1013 is a cantilever with one end connected to the thermally conductive plate. At this time, only one flow channel 104 is formed. When the stiffener 1013 is connected to the first thermally conductive plate 1011 and the second thermally conductive plate 1012, two flow channels 104 are formed. The number of the stiffeners 1013 may be specifically set according to requirements, which is not limited in this embodiment of the present application.

Optionally, when the number of the flow channels 104 is multiple, different flow channels 104 may be independent of each other, and may also be connected through an adapter.

Optionally, the stiffener 1013 extends along the first direction, and an angle between the stiffener and the first thermally conductive plate 1011 or the second thermally conductive plate 1012 is a right angle. In this case, the thermal management component 101 may bear a larger pressure.

Optionally, in an embodiment of the present application, the angle between the stiffener 1013 and the first thermally conductive plate 1011 or the second thermally conductive plate 1012 is an acute angle. In this way, the thermal management component 101 may have a larger compression space in the second direction, and may provide more expansion space for the battery cell 20.

Optionally, in an embodiment of the present application, the battery cell 20 includes two first walls 20a disposed opposite to each other in the second direction and two second walls 20b disposed opposite to each other in the first direction, where in the first direction, the second walls 20b of two adjacent battery cells 20 face each other. For example, the battery cell 20 includes a first wall 20a, a second wall 20b and third walls; the first wall 20a, the second wall 20b and the third walls are adjacent to each other, where a surface area of the first wall 20a is larger than that of the second wall 20b, one of the third walls is disposed away from the bottom of the box as the top surface of the battery cell, and the other is disposed toward the bottom of the box as the bottom surface of the battery cell.

FIG. 9 is a schematic structural diagram of a battery according to an embodiment of the present application. As shown in FIG. 9, the battery 10 includes a plurality of the battery cells 20 arranged in a plurality of columns along the first direction and a plurality of the thermal management components 101, where the plurality of columns of the battery cells 20 and the plurality of the thermal management components 101 are alternately disposed in the second direction.

The battery 10 includes a box 11, a plurality of columns of battery cells 20 and a plurality of thermal management components 101, a pipe 103 and a current collector 102. The current collector 102 and the pipe 103 are disposed at both ends of the thermal management component 101 along the first direction, and the fluid is transported to the current collector 102 through the pipe 103, and then collected by the current collector 102 and transported to the thermal management component 101, so as to cool the battery cell 20.

The plurality of columns of battery cells 20 and the plurality of thermal management components 101 are alternately disposed in the second direction, where along the second direction, they may be arranged in the manner of battery cell-thermal management component-battery cell, or may be arranged in the manner of thermal management component-battery-cell-thermal management component. In the former arrangement manner, the number of columns of battery cells 20 is N, and the number of thermal management components 101 is N-1. The energy density of the battery 10 arranged in this manner is higher. In the latter arrangement manner, the number of columns of battery cells 20 is N, and the number of thermal management components 101 is N+1. Thermal management performances of the battery 10 arranged in this manner are better, and it is faster to cool the battery cell 20. Both of the above two arrangement manners may cool the battery cell 20 in time on the premise of ensuring the energy density of the battery 10, and effectively prevent the heat of the battery cells 20 from diffusing to the adjacent battery cells 20.

Optionally, in the battery 10, it may also be arranged in the manner of thermal management component-battery cell-battery cell-thermal management component, as long as cooling or heating of the first wall 20a of the battery cell 20 may be achieved, which is not limited in the embodiments of the present application.

Optionally, in an embodiment of the present application, the thermal management component 101 and the first wall 20a are bonded. In this way, the fixing strength between the thermal management component 101 and the first wall 20a is increased.

Optionally, the thermal management component 101 may also be clamped between the battery cells 20 in adjacent columns or between side walls of the box 11 and the battery cell 20 by abutting against the first wall 20a.

It should be understood that the relevant parts in each embodiment of the present application may be referred to each other, and for the sake of brevity, details are not described herein again.

An embodiment of the present application further provides a power consumption device, which may include the battery 10 in the above embodiments. Optionally, the power consumption device may be a vehicle 1, a ship or a spacecraft, etc., but this is not limited by the embodiment of the present application.

The battery 10 and the power consumption device of the embodiment of the present application are described above, and a method and a device for producing a battery of the embodiments of the present application will be described below. For the parts that are not described in detail, reference is made to the foregoing embodiments.

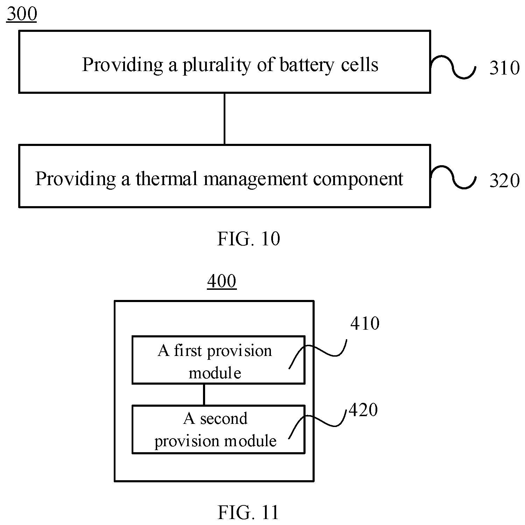

FIG. 10 shows a schematic flowchart of a method 300 for producing a battery according to an embodiment of the present application. As shown in FIG. 10, the method 300 may include:
310, providing a plurality of battery cells 20 arranged along a first direction; and
320, providing a thermal management component 101 extending along the first direction and being connected to a first wall 20a of each battery cell 20 of the plurality of battery cells 20, the first wall 20a being a wall with a largest surface area of the battery cell 20; the thermal management component includeing a flow channel 104 for accommodating a fluid to adjust a temperature of the battery cell 20; a second direction being perpendicular to the first wall; where, a size of the flow channel 104 in the second direction is W, and a capacity Q of the battery cell 20 and the size W of the flow channel 104 satisfy: 1.0Ah/mm≤Q/W≤400Ah/mm.

FIG. 11 is a schematic block diagram of a device 400 for producing a battery according to an embodiment of the present application. As shown in FIG. 11, the device 400 for producing the battery may include: a first provision module 410 and a second provision module 420.

The first provision module 410 is configured to provide a plurality of battery cells 20 arranged along a first direction.

The second provision module 420 is configured to provide a thermal management component 101 extending along the first direction and connected to a first wall 20a of each battery cell 20 of the plurality of battery cells 20, the first wall 20a being the wall with a largest surface area of the battery cell 20; the thermal management component includes a flow channel 104 for accommodating a fluid to adjust a temperature of the battery cell 20; a second direction is perpendicular to the first wall; where, a size of the flow channel 104 in the second direction is W, and a capacity Q of the battery cell 20 and the size W of the flow channel 104 satisfy: 1.0Ah/mm≤Q/W≤400Ah/mm.

The embodiments of present application are explained in the following. The embodiments described below are exemplary and intended to be used to only explain the present application, and may not be understood as limiting the present application.

Using a combination manner of two columns of battery cells 20 and two thermal management components 101, a thermal diffusion test of the battery 10 is performed according to GB38031-2020, and test results are shown in Table 1.

**Table 1 Thermal diffusion test of battery cells and thermal management components with different specifications**

| (Q/Ah) | (D/mm) | (H/mm) | (W/mm) | Q/W | D/H | Thermal diffusion or not |
|---|---|---|---|---|---|---|
| 280 | 88 | 260 | 50 | 5.6 | 0.3385 | No |
| 280 | 88 | 260 | 6 | 46.6667 | 0.3385 | No |
| 280 | 88 | 102 | 6 | 46.6667 | 0.8627 | No |
| 280 | 88 | 102 | 3 | 93.3333 | 0.8627 | No |
| 280 | 88 | 102 | 0.8 | 350.0000 | 0.8627 | No |
| 280 | 88 | 30 | 6 | 46.6667 | 2.9333 | No |
| 280 | 88 | 13 | 0.6 | 466.6667 | 6.7692 | YES |
| 248 | 66.5 | 80 | 2 | 124.0000 | 0.8313 | No |
| 248 | 66.5 | 102 | 0.8 | 310.0000 | 0.6520 | No |
| 169 | 70 | 102 | 3 | 56.3333 | 0.6863 | No |
| 70 | 28.5 | 102 | 2 | 35.0000 | 0.2794 | No |
| 180 | 79 | 80 | 2 | 90.0000 | 0.9875 | No |
| 117 | 33.2 | 102 | 0.8 | 146.2500 | 0.3255 | No |
| 5 | 12.5 | 50 | 3 | 1.6667 | 0.2500 | No |
| 5 | 12.5 | 150 | 3 | 1.6667 | 0.0833 | No |
| 5 | 12.5 | 102 | 0.8 | 6.2500 | 0.1225 | No |

## Claims

1. A battery (10), comprising:
a plurality of battery cells (20) arranged along a first direction; and
a thermal management component (101) extending along the first direction and being connected to a first wall (20a) of each battery cell (20) of the plurality of battery cells (20), the first wall (20a) being a wall with a largest surface area of the battery cell (20); the thermal management component (101) comprising a flow channel (104) for accommodating a fluid to adjust a temperature of the battery cell (20); a second direction being perpendicular to the first wall (20a);
wherein, a size of the flow channel (104) in the second direction is W, and a capacity Q of the battery cell (20) and the size W of the flow channel (104) satisfy: 1.0Ah/mm≤Q/W≤400Ah/mm;
wherein the battery comprises a plurality of the battery cells (20) arranged in a plurality of columns along the first direction and a plurality of the thermal management components (101), wherein the plurality of columns of the battery cells (20) and the plurality of the thermal management components (101) are alternately disposed in the second direction.

2. The battery (10) according to claim 1, wherein a size D of the battery cell (20) along the second direction and a size H of the thermal management component (101) along a third direction satisfy: 0.03≤D/H≤5.5, and the third direction is perpendicular to the first direction and the second direction.

3. The battery (10) according to claim 2, wherein the size H of the thermal management component (101) along the third direction is 15mm~300mm.

4. The battery (10) according to any one of claims 1 to 3, wherein the size W of the flow channel (104) is 0.8 mm~50 mm.

5. The battery (10) according to any one of claims 1 to 4, wherein the thermal management component (101) comprises a first thermally conductive plate (1011) and a second thermally conductive plate (1012) disposed oppositely along the second direction;
wherein, a flow channel (104) is disposed between the first thermally conductive plate (1011) and the second thermally conductive plate (1012), and the flow channel (104) is configured to accommodate a fluid to adjust the temperature of the battery cell (20).

6. The battery (10) according to claim 5, wherein the thermal management component (101) further comprises a stiffener (1013), disposed between the first thermally conductive plate (1011) and the second thermally conductive plate (1012); and the stiffener (1013), the first thermally conductive plate (1011) and the second thermally conductive plate (1012) form the flow channel (104).

7. The battery (10) according to claim 6, wherein an angle between the stiffener (1013) and the first thermally conductive plate (1011) or the second thermally conductive plate (1012) is an acute angle.

8. The battery (10) according to any one of claims 1 to 7, wherein the battery cell (20) comprises two first walls (20a) disposed opposite to each other in the second direction and two second walls (20b) disposed oppositely in the first direction, wherein in the first direction, the second walls (20b) of two adjacent battery cells (20) face each other.

9. The battery (10) according to any one of claims 1 to 8, wherein the thermal management component (101) and the first wall (20a) are bonded.

10. A power consumption device, comprising: the battery (10) according to any one of claims 1 to 9, the battery (10) being configured to provide electric energy.

11. A method (300) for producing a battery, comprising:
providing (310) a plurality of battery cells (20) arranged along a first direction; and
providing (320) a thermal management component (101) extending along the first direction and being connected to a first wall (20a) of each battery cell (20) of the plurality of battery cells (20), the first wall (20a) being a wall with a largest surface area of the battery cell (20); the thermal management component (101) comprising a flow channel (104) for accommodating a fluid to adjust a temperature of the battery cell (20); a second direction being perpendicular to the first wall (20a);
wherein, a size of the flow channel (104) in the second direction is W, and a capacity Q of the battery cell (20) and the size W of the flow channel (104) satisfy: 1.0Ah/mm≤Q/W≤400Ah/mm;
wherein the battery comprises a plurality of the battery cells (20) arranged in a plurality of columns along the first direction and a plurality of the thermal management components (101), wherein the plurality of columns of the battery cells (20) and the plurality of the thermal management components (101) are alternately disposed in the second direction.

12. A device (400) for producing a battery, comprising:
a first provision module (410) for providing a plurality of battery cells (20) arranged along a first direction; and
a second provision module (420) for providing a thermal management component (101) extending along the first direction and being connected to a first wall (20a) of each battery cell (20) of the plurality of battery cells (20), the first wall (20a) being a wall with a largest surface area of the battery cell (20); the thermal management component (101) comprising a flow channel (104) for accommodating a fluid to adjust a temperature of the battery cell (20); a second direction being perpendicular to the first wall (20a);
wherein, a size of the flow channel (104) in the second direction is W, and a capacity Q of the battery cell (20) and the size W of the flow channel (104) satisfy: 1.0Ah/mm≤Q/W≤400Ah/mm;
wherein the battery comprises a plurality of the battery cells (20) arranged in a plurality of columns along the first direction and a plurality of the thermal management components (101), wherein the plurality of columns of the battery cells (20) and the plurality of the thermal management components (101) are alternately disposed in the second direction.

## Patentansprüche

1. Batterie (10), umfassend:
eine Mehrzahl von Batteriezellen (20), die entlang einer ersten Richtung angeordnet sind; und
eine Wärmemanagementkomponente (101), die sich entlang der ersten Richtung erstreckt und mit einer ersten Wand (20a) jeder Batteriezelle (20) der Mehrzahl von Batteriezellen (20) verbunden ist, wobei die erste Wand (20a) eine Wand mit einem größten Oberflächenbereich der Batteriezelle (20) ist; wobei die Wärmemanagementkomponente (101) einen Strömungskanal (104) zum Aufnehmen eines Fluids zum Anpassen einer Temperatur der Batteriezelle (20) umfasst; wobei eine zweite Richtung senkrecht zu der ersten Wand (20a) steht;
wobei eine Größe des Strömungskanals (104) in der zweiten Richtung W ist und eine Kapazität Q der Batteriezelle (20) und die Größe W des Strömungskanals (104) Folgendes erfüllen: 1,0 Ah/mm≤Q/W≤400 Ah/mm;
wobei die Batterie eine Mehrzahl der Batteriezellen (20), die in einer Mehrzahl von Spalten entlang der ersten Richtung angeordnet sind, und eine Mehrzahl der Wärmemanagementkomponenten (101) umfasst, wobei die Mehrzahl von Spalten der Batteriezellen (20) und die Mehrzahl der Wärmemanagementkomponenten (101) abwechselnd in der zweiten Richtung angeordnet sind.

2. Batterie (10) nach Anspruch 1, wobei eine Größe D der Batteriezelle (20) entlang der zweiten Richtung und eine Größe H der Wärmemanagementkomponente (101) entlang einer dritten Richtung Folgendes erfüllen: 0,03≤D/H≤5,5, und wobei die dritte Richtung senkrecht zu der ersten Richtung und der zweiten Richtung steht.

3. Batterie (10) nach Anspruch 2, wobei die Größe H der Wärmemanagementkomponente (101) entlang der dritten Richtung 15 mm~300mm ist.

4. Batterie (10) nach einem der Ansprüche 1 bis 3, wobei die Größe W des Strömungskanals (104) 0,8 mm-50 mm ist.

5. Batterie (10) nach einem der Ansprüche 1 bis 4, wobei die Wärmemanagementkomponente (101) eine erste wärmeleitfähige Platte (1011) und eine zweite wärmeleitfähige Platte (1012) umfasst, die entgegengesetzt entlang der zweiten Richtung angeordnet sind;
wobei ein Strömungskanal (104) zwischen der ersten wärmeleitfähigen Platte (1011) und der zweiten wärmeleitfähigen Platte (1012) angeordnet ist und der Strömungskanal (104) dazu ausgelegt ist, ein Fluid zum Anpassen der Temperatur der Batteriezelle (20) aufzunehmen.

6. Batterie (10) nach Anspruch 5, wobei die Wärmemanagementkomponente (101) ferner eine Versteifung (1013) umfasst, die zwischen der ersten wärmeleitfähigen Platte (1011) und der zweiten wärmeleitfähigen Platte (1012) angeordnet ist; und wobei die Versteifung (1013), die erste wärmeleitfähige Platte (1011) und die zweite wärmeleitfähige Platte (1012) den Strömungskanal (104) bilden.

7. Batterie (10) nach Anspruch 6, wobei ein Winkel zwischen der Versteifung (1013) und der ersten wärmeleitfähigen Platte (1011) oder der zweiten wärmeleitfähigen Platte (1012) ein spitzer Winkel ist.

8. Batterie (10) nach einem der Ansprüche 1 bis 7, wobei die Batteriezelle (20) zwei erste Wände (20a), die entgegengesetzt zueinander in der zweiten Richtung angeordnet sind, und zwei zweite Wände (20b), die entgegengesetzt in der ersten Richtung angeordnet sind, umfasst, wobei in der ersten Richtung die zweiten Wände (20b) von zwei benachbarten Batteriezellen (20) einander zugewandt sind.

9. Batterie (10) nach einem der Ansprüche 1 bis 8, wobei die Wärmemanagementkomponente (101) und die erste Wand (20a) verbunden sind.

10. Stromverbrauchsvorrichtung, umfassend: die Batterie (10) nach einem der Ansprüche 1 bis 9, wobei die Batterie (10) dazu ausgelegt ist, elektrische Energie bereitzustellen.

11. Verfahren (300) zum Herstellen einer Batterie, umfassend:
Bereitstellen (310) einer Mehrzahl von Batteriezellen (20), die entlang einer ersten Richtung angeordnet sind; und
Bereitstellen (320) einer Wärmemanagementkomponente (101), die sich entlang der ersten Richtung erstreckt und mit einer ersten Wand (20a) jeder Batteriezelle (20) der Mehrzahl von Batteriezellen (20) verbunden ist, wobei die erste Wand (20a) eine Wand mit einem größten Oberflächenbereich einer Batteriezelle (20) ist; wobei die Wärmemanagementkomponente (101) einen Strömungskanal (104) zum Aufnehmen eines Fluids zum Anpassen einer Temperatur der Batteriezelle (20) umfasst; wobei eine zweite Richtung senkrecht zu der ersten Wand (20a) steht;
wobei eine Größe des Strömungskanals (104) in der zweiten Richtung W ist und eine Kapazität Q der Batteriezelle (20) und die Größe W des Strömungskanals (104) Folgendes erfüllen: 1,0 Ah/mm≤Q/W≤400 Ah/mm;
wobei die Batterie eine Mehrzahl der Batteriezellen (20), die in einer Mehrzahl von Spalten entlang der ersten Richtung angeordnet sind, und eine Mehrzahl der Wärmemanagementkomponenten (101) umfasst, wobei die Mehrzahl von Spalten der Batteriezellen (20) und die Mehrzahl der Wärmemanagementkomponenten (101) abwechselnd in der zweiten Richtung angeordnet sind.

12. Vorrichtung (400) zum Herstellen einer Batterie, umfassend:
ein erstes Bereitstellungsmodul (410) zum Bereitstellen einer Mehrzahl von Batteriezellen (20), die entlang einer ersten Richtung angeordnet sind; und
ein zweites Bereitstellungsmodul (420) zum Bereitstellen einer Wärmemanagementkomponente (101), die sich entlang der ersten Richtung erstreckt und mit einer ersten Wand (20a) jeder Batteriezelle (20) der Mehrzahl von Batteriezellen (20) verbunden ist, wobei die erste Wand (20a) eine Wand mit einem größten Oberflächenbereich einer Batteriezelle (20) ist; wobei die Wärmemanagementkomponente (101) einen Strömungskanal (104) zum Aufnehmen eines Fluids zum Anpassen einer Temperatur der Batteriezelle (20) umfasst; wobei eine zweite Richtung senkrecht zu der ersten Wand (20a) steht;
wobei eine Größe des Strömungskanals (104) in der zweiten Richtung W ist und eine Kapazität Q der Batteriezelle (20) und die Größe W des Strömungskanals (104) Folgendes erfüllen: 1,0 Ah/mm≤Q/W≤400 Ah/mm;
wobei die Batterie eine Mehrzahl der Batteriezellen (20), die in einer Mehrzahl von Spalten entlang der ersten Richtung angeordnet sind, und eine Mehrzahl der Wärmemanagementkomponenten (101) umfasst, wobei die Mehrzahl von Spalten der Batteriezellen (20) und die Mehrzahl der Wärmemanagementkomponenten (101) abwechselnd in der zweiten Richtung angeordnet sind.

## Revendications

1. Batterie(10), comprenant :
une pluralité d'éléments de batterie (20) disposés le long d'une première direction ; et
un composant de gestion thermique (101) s'étendant le long de la première direction et connecté à une première paroi (20a) de chaque élément de batterie (20) de la pluralité d'éléments de batterie (20), la première paroi (20a) étant une paroi de l'élément de batterie (20) ayant la plus grande superficie ; le composant de gestion thermique (101) comprenant un canal d'écoulement (104) pour accueillir un fluide pour ajuster la température de l'élément de batterie (20) ; une deuxième direction étant perpendiculaire à la première paroi (20a) ;
une taille du canal d'écoulement (104) dans la deuxième direction étant désignée W, et une capacité Q de l'élément de batterie (20) et la taille W du canal d'écoulement (104) satisfaisant à : 1,0 Ah/mm ≤ Q/W ≤ 400 Ah/mm ;
la batterie comprenant une pluralité des éléments de batterie (20) agencés en une pluralité de colonnes le long de la première direction et une pluralité des composants de gestion thermique (101), la pluralité de colonnes des éléments de batterie (20) et la pluralité des composants de gestion thermique (101) étant agencés en alternance dans la deuxième direction.

2. Batterie (10) selon la revendication 1, dans laquelle une taille D de l'élément de batterie (20) le long de la deuxième direction et une taille H du composant de gestion thermique (101) le long d'une troisième direction satisfont à : 0,03 ≤ D/H ≤5,5, et la troisième direction est perpendiculaire la première direction et à la deuxième direction.

3. Batterie (10) selon la revendication 2, dans laquelle la taille H du composant de gestion thermique (101) le long de la troisième direction est de 15mm-300mm.

4. Batterie (10) selon l'une quelconque des revendications 1 à 3, dans laquelle la taille W du canal d'écoulement (104) est de 0,8mm~50mm.

5. Batterie (10) selon l'une quelconque des revendications 1 à 4, dans laquelle le composant de gestion thermique (101) comprend une première plaque thermoconductrice (1011) et une deuxième plaque thermoconductrice (1012) disposées de manière opposée le long de la deuxième direction ;
un canal d'écoulement (104) étant disposé entre la première plaque thermoconductrice (1011) et la deuxième plaque thermoconductrice (1012), et le canal d'écoulement (104) étant configuré pour accueillir un fluide pour ajuster la température de l'élément de batterie (20).

6. Batterie (10) selon la revendication 5, dans laquelle le composant de gestion thermique (101) comprend en outre un raidisseur (1013), disposé entre la première plaque thermoconductrice (1011) et la deuxième plaque thermoconductrice (1012) ; et le raidisseur (1013), la première plaque thermoconductrice (1011) et la deuxième plaque thermoconductrice (1012) formant le canal d'écoulement (104).

7. Batterie (10) selon la revendication 6, dans laquelle un angle entre le raidisseur (1013) et la première plaque thermoconductrice (1011) ou la deuxième plaque thermoconductrice (1012) est un angle aigu.

8. Batterie (10) selon l'une quelconque des revendications 1 à 7, dans laquelle l'élément de batterie (20) comprend deux premières parois (20a) disposées de manière opposée l'une à l'autre dans la deuxième direction et deux deuxièmes parois (20b) disposées de manière opposée dans la première direction, les deuxièmes parois (20b) de deux éléments de batterie (20) adjacents se faisant face dans la première direction.

9. Batterie (10) selon l'une quelconque des revendications 1 à 8, dans laquelle le composant de gestion thermique (101) et la première paroi (20a) sont collés.

10. Dispositif de consommation d'énergie comprenant : la batterie (10) selon l'une quelconque des revendications 1 à 9, la batterie (10) étant configurée pour fournir de l'énergie électrique.

11. Procédé (300) de production d'une batterie, comprenant :
la fourniture (310) d'une pluralité d'éléments de batterie (20) disposés le long d'une première direction ; et
la fourniture (320) d'un composant de gestion thermique (101) s'étendant le long de la première direction et connecté à une première paroi (20a) de chaque élément de batterie (20) de la pluralité d'éléments de batterie (20), la première paroi (20a) étant une paroi de l'élément de batterie (20) ayant la plus grande superficie ; le composant de gestion thermique (101) comprenant un canal d'écoulement (104) pour accueillir un fluide pour ajuster la température de l'élément de batterie (20) ; une deuxième direction étant perpendiculaire à la première paroi (20a) ;
une taille du canal d'écoulement (104) dans la deuxième direction étant désignée W, et une capacité Q de l'élément de batterie (20) et la taille W du canal d'écoulement (104) satisfaisant à : 1,0 Ah/mm ≤ Q/W ≤ 400 Ah/mm ;
la batterie comprenant une pluralité des éléments de batterie (20) agencés en une pluralité de colonnes le long de la première direction et une pluralité des composants de gestion thermique (101), la pluralité de colonnes des éléments de batterie (20) et la pluralité des composants de gestion thermique (101) étant agencés en alternance dans la deuxième direction.

12. Dispositif (400) de production d'une batterie, comprenant :
un premier module d'approvisionnement (410) pour fournir une pluralité d'éléments de batterie (20) disposés le long d'une première direction ; et
un deuxième module d'approvisionnement (420) pour fournir un composant de gestion thermique (101) s'étendant le long de la première direction et connecté à une première paroi (20a) de chaque élément de batterie (20) de la pluralité d'éléments de batterie (20), la première paroi (20a) étant une paroi de l'élément de batterie (20) ayant la plus grande superficie ; le composant de gestion thermique (101) comprenant un canal d'écoulement (104) pour accueillir un fluide **pour ajuster** la température de l'élément de batterie (20) ; une deuxième direction étant perpendiculaire à la première paroi (20a) ;
une taille du canal d'écoulement (104) dans la deuxième direction étant désignée W, et une capacité Q de l'élément de batterie (20) et la taille W du canal d'écoulement (104) satisfaisant à : 1,0 Ah/mm ≤ Q/W ≤ 400 Ah/mm ;
la batterie comprenant une pluralité des éléments de batterie (20) agencés en une pluralité de colonnes le long de la première direction et une pluralité des composants de gestion thermique (101), la pluralité de colonnes des éléments de batterie (20) et la pluralité des composants de gestion thermique (101) étant agencés en alternance dans la deuxième direction.
